Europäisches Patentamt

**European Patent Office**

Office européen des brevets

(11) Veröffentlichungsnummer : **0 170 932**
**B1**

(12)                          EUROPÄISCHE PATENTSCHRIFT

(45) Veröffentlichungstag der Patentschrift :
15.03.89

(51) Int. Cl.⁴ : **H 02 M   3/156**, H 04 B   3/44

(21) Anmeldenummer : 85108739.5

(22) Anmeldetag : 12.07.85

(54) Schaltungsanordnung zur Speisung von elektrischen Verbrauchern über einen Schaltregler.

(30) Priorität : 13.07.84 DE 3425903

(43) Veröffentlichungstag der Anmeldung :
12.02.86 Patentblatt 86/07

(45) Bekanntmachung des Hinweises auf die Patenterteilung : 15.03.89 Patentblatt 89/11

(84) Benannte Vertragsstaaten :
AT BE CH DE FR GB IT LI NL SE

(56) Entgegenhaltungen :
EP--A-- 0 111 729

(73) Patentinhaber : Siemens Aktiengesellschaft Berlin
und München
Wittelsbacherplatz 2
D-8000 München 2 (DE)

(72) Erfinder : Musil, Gerhard, Dipl.-Ing.
Ludwig-Braille-Strasse 8
D-8000 München 70 (DE)

Jouve, 18, rue St-Denis, 75001 Paris, France

**Beschreibung**

Die Erfindung bezieht sich auf eine wie im Oberbegriff des Patentanspruchs 1 angegebene Schaltungsanordnung.

Eine derartige Schaltungsanordnung ist bereits aus der EP-17-111 729 bekannt.

Die bekannte Schaltungsanordnung dient dazu, elektrische Verbraucher fernzuspeisen, wobei der konstant gehaltene Fernspeisestrom in der dem Verbraucher vorgeschalteten Schaltungsanordnung zunächst in eine konstante Spannung umgeformt und diese dann potentialgetrennt auf die gewünschte Verbraucherspannung transformiert wird. Da die Schaltungsanordnung ihre Eingangsspannung der jeweils benötigten Leistung anpassen kann, arbeitet sie sehr verlustarm. Wird die Schaltungsanordnung verbraucherseitig überlastet, so sinkt auch die Eingangsspannung und damit die mögliche Leistungsaufnahme. Die Schaltungsanordnung ist damit vergleichsweise sicher vor Beschädigungen durch zu hohe Belastung.

Untersuchungen im Rahmen der Erfindung haben jedoch ergeben, daß es in manchen Fällen wünschenswert ist, eine mögliche Überlast eine gewisse Zeit mit maximaler Leistungsabgabe zu überbrücken und daß ein solcher Fall insbesondere dann vorliegt, wenn die Schaltungsanordnung mehrere Ausgänge hat und an diesen Ausgängen Verbraucher betrieben werden, die bei wechselnder Spannung eine konstante Leistungsaufnahme haben. Unter derartigen Voraussetzungen kann nämlich eine leistungsmäßige Überlastung an einem der Ausgänge zu einem allgemeinen Einbruch der Ausgangsspannung führen. Wird dann in der Folge der Verbraucher, der zu der Überlastung führte, von dem ihm zugeordneten Ausgang abgeschaltet, so nehmen trotzdem die anderen Verbraucher bei der dann verringerten Spannung erhöhten Strom auf. Ist mittlerweile die Eingangsspannung der Schaltungsanordnung abgesunken, so kann der erhöhte Strom unter Umständen nicht mehr abgegeben werden, obwohl in der Summe die Leistung geringer ist als die, die die Schaltungsanordnung im Betrieb maximal abgeben könnte. Die Ausgangsspannung kann auf diese Weise endgültig zusammenbrechen, so daß die Schaltungsanordnung die an sich noch intakten Verbraucher nicht weiter betreiben kann.

Andererseits kann es bei einer Schaltungsanordnung der eingangs genannten Art in besonderen Fällen vorkommen, daß sich aufgrund einer Überlast am Ausgang die Eingangsspannung so weit erhöht, daß die speisende Konstantstromquelle in den Zustand der Spannungsbegrenzung übergeht und der Eingangsstrom des Gleichstrom-Gleichspannungsumsetzers absinkt. Dies kann zu Stabilitätsproblemen oder zum Abschalten der Konstantstromquelle führen.

Aufgabe der Erfindung ist es daher, die Schaltungsanordnung der eingangs genannten Art derart auszubilden, daß sie möglichst unempfindlich gegen Überlastungszustände ist.

Insbesondere soll sie in der Lage sein, im Anschluß an einen Überlastungszustand selbsttätig in den normalen Betriebszustand überzugehen.

Gemäß der Erfindung wird die Schaltungsanordnung zur Lösung dieser Aufgabe in der im kennzeichnenden Teil des Patentanspruchs 1 angegebenen Weise ausgebildet.

Durch die erfindungsgemäßen Maßnahmen ergibt sich der Vorteil, daß die Schaltungsanordnung besonders unversell verwendbar ist, insbesondere auch zur Speisung von Verbrauchern mit wenigstens annähernd konstanter Leistungsaufnahme.

Weitere Ausgestaltungen der Erfindung ergeben sich aus den abhängigen Ansprüchen.

Bildet man die Schaltungsanordnung derart aus, daß der vorgegebene Grenzwert des Stromes kleiner als der Fernspeisestrom ist, so ergibt sich, daß der Schaltregler immer im Schaltbetrieb bleibt, so daß sich ein besonders stabiler Betriebszustand ergibt.

Bei einer Ausbildung der Schaltungsanordnung gemäß Anspruch 3 ergibt sich, daß die Verminderung der Ausgangsspannung durch eine Änderung des Tastverhältnisses oder der Folgefrequenz der Steuerimpulse des im übrigen vorzugsweise ungeregelten Spannungsumrichters ist.

Die Weiterbildung der Schaltungsanordnung nach Anspruch 6 ist insbesondere dann zweckmäßig, wenn der Spannungsumrichter am Eingang keine Mittel zur Ladungsspeicherung hat oder wenn der Stromfühler eine zusätzliche Wicklung im Spannungsumsetzer enthaltenen Übertragers ist.

Bei der Weiterbildung der Schaltungsanordnung gemäß Anspruch 8 gibt ein Komparator Impulse mit vorgegebener Dauer ab. Dabei kann die Dauer konstant und durch das gewünschte Umsetzungsverhältnis vorgegeben sein. Andererseits kann die Dauer, insbesondere in vergleichsweise geringem Umfang, durch eine Vorrichtung zur Regelung der Ausgangsspannung U3, durch eine Kompensationsschaltung oder dergleichen etwas variiert werden.

Die Erfindung wird anhand der in den Figuren dargestellten Ausführungsbeispiele näher erläutert.

Es zeigen :

Fig. 1 eine Schaltungsanordnung mit einem Schaltregler und einem Spannungsumsetzer mit selbsttätiger Begrenzung der Eingangsleistung,

Fig. 2 eine Schaltungsanordnung mit mehreren einzeln abgesicherten Spannungsumrichtern als Verbraucher und

Fig. 3 eine Schaltungsanordnung mit einem Schaltregler und einem Spannungsumsetzer mit einem Feldeffekttransistor als Schaltglied.

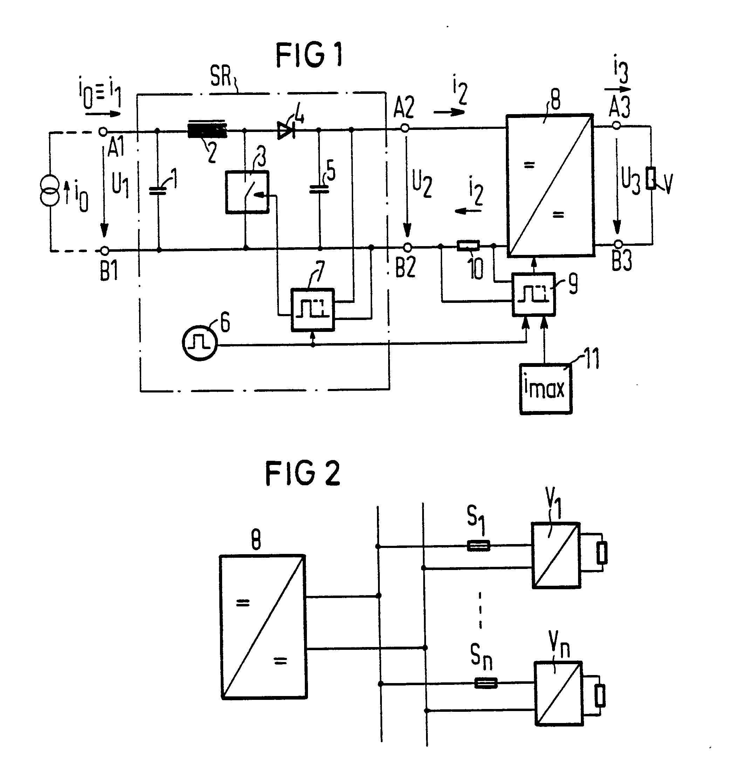

Die in Figur 1 gezeigte Schaltungsanordnung ist ein konstantstromgespeister Gleichstrom-Gleichspannungs-Umrichter, der eine konstante, potentialgetrennte Spannung für eine variable Belastung erzeugt. Er dient vorzugsweise als Umrichter in Einrichtungen zur Fernspeisung von Zwischenstellen einer Nachrichtenübertragungseinrichtung mittels Gleichstrom-Reihenspeisung.

Der Umrichter enthält einen entsprechend geregelten, als Drosselwandler ausgebildeten Schaltregler SR, der eine variabel aufgenommene Eingangsspannung U1 in eine stabilisierte Spannung U2 umsetzt. Die Spannung U2 ist so gewählt, daß sie etwas höher ist als die der Maximalleistung zugeordnete Eingangsspannung U1. Aus der stabilisiertun Spannung U2 wird von dem als Durchflußwandler ausgebildeten nachgeschalteten Spannungsumrichter 8 potentialgetrennt die Ausgangsspannung U3 erzeugt.

Bei dem Schaltregler SR ist parallel zum Eingang der Kondensator 1 und parallel zum Ausgang der Kondensator 5 angeordnet. Die Kondensatoren 1 und 5 und das Schaltglied 3 sind einpolig miteinander verbunden. Auf der diesem Verbindungspunkt abgewandten Seite sind die Kondensatoren 1 und 5 über eine Serienschaltung aus der Drossel 2 und der Diode 4 verbunden, wobei die Drossel 2 am Eingang liegt und die Diode 4 so gepolt ist, daß sie für Ströme vom Eingang zum Ausgang durchlässig ist. Das Schaltglied 3 ist in einem Querzweig des Schaltreglers zwischen dem Verbindungspunkt von Drossel 2 und Diode 4 einerseits und dem Verbindungspunkt der Kondensatoren 1 und 5 andererseits angeordnet.

Der Schaltregler SR bildet den eigentlichen Strom-Spannungsumformer. Der Kondensator 1 ist im Vergleich zu dem am Ausgang des Schaltreglers liegenden Kondensator 5 klein.

Der Halbleiterschalter 3 wird von einem impulsbreitenmodulierten Signal in der Weise geöffnet und geschlossen, daß vom Fernspeisekreis und von der in der Drossel 2 und dem Eingangskondensator 1 gespeicherten Energie über die Diode 4 dem Ausgangskondensator 5 gerade soviel zugeleitet wird, daß an diesem eine Spannung konstant bleibt, solange ein bestimmter maximaler Laststrom, der an dieser Stelle höchstens gleich dem Fernspeisestrom $I_0$ sein kann, nicht überschritten wird. Die Steuerung des pulsbreitenmodulierten Signals erfolgt in gleicher Weise wie bei bekannten Drosselwandlern.

Es ist zweckdienlich, wenn der Laststrom $I_2$ des Schaltreglers SR immer kleiner als des Strom $I_1$ bzw. der gleich große Fernspeisestrom $I_0$ ist, da dann der Schalter 3 immer im Schaltbetrieb arbeitet und somit gleichbleibende Betriebsbedingungen herrschen. Die Spannung U2 ist dann immer größer als die der Maximalleistung zugeordnete Wert der Spannung U1. Der dem Schaltregler nachgeschaltete Gleichspannungsumrichter kann wegen der konstanten Spannung an seinem Eingang in einfacher Weise nach einem der bekannten Prinzipien ausgeführt werden. Es ist vorzugsweise ein ungeregelter Durchflußumrichter mit Trennübertrager. Seine Taktfrequenz wird vorteilhaft vom gleichen Taktgeber 6 bezogen, die auch den Schaltregler SR ansteuert.

Aus dem vom Taktgeber 6 abgegebenen Signal wird in der Ansteuervorrichtung 9 eine Impulsfolge abgegeben, die den im Umrichter 8 befindlichen, in Figur 1 nicht dargestellten Leistungsschalter mit entsprechenden Steuersignalen steuert. Bei der Erzeugung der Steuersignale kann gegebenenfalls wenigstens ein im Taktgeber 6 oder im Regler 7 vorhandenes Signal mitbenützt werden.

Der Umrichter 8 kann auch mit einem eigenen Taktgeber ausgerüstet sein, der unabhängig vom Taktgeber 6 arbeitet oder auch mit diesem synchronisiert ist. Bei einer Anordnung wie in Figur 1 mit gemeinsamen Taktgeber 6 ergibt sich eine besonders einfach zu realisierende Anordnung.

Der Schaltregler SR reagiert bei Überlast so, daß seine Eingangsspannung U1 vermindert wird. Damit bedingt aber eine zeitweilige Überlast einen Zusammenbruch der Eingangsspannung U1. Dies wird verhindert, wenn der dem Schaltregler SR nachgeschaltete Spannungsumsetzer 8 mit einer Vorrichtung zur Leistungsbegrenzung ausgestaltet ist. Der Einsatzpunkt der Leistungsbegrenzung liegt unter der diesem Spannungsumsetzer möglichen maximalen Leistungsaufnahme. Da am Eingang des Spannungsumsetzers 8 im Betriebsfall immer die praktisch konstant gehaltene Spannung U2 anliegt, genügt es, an dieser Stelle den aufgenommenen Strom zu beobachten und das Verhalten des Spannungsumsetzers in der Weise zu beeinflussen, daß ein bestimmter maximaler Wert des Eingangsstromes des Spannungsumsetzers 8 nicht überschritten werden kann.

Der Strom $I_2$ wird nun in einem Widerstand 10 in einen proportionalen Spannungsabfall umgewandelt und der Ansteuervorrichtung 9 zugeführt. Dieser Spannungsabfall wird in der Ansteuervorrichtung 9 in bekannter Weise mit einer Referenzspannung, die vom Grenzwertgeber 11 zugeführt wird, verglichen. Ergibt der Vergleich, daß der Grenzwert des Stromes erreicht bzw. überschritten ist, so wird das Tastverhältnis der von der Ansteuervorrichtung 9 abgegebenen Impulsfolge so geändert, daß der Wandler 8 eine verminderte Spannung U3 abgibt.

Hat der Wandler 8 an seinem Eingang keinen Kondensator, so fließt der Strom $I_2$ pulsförmig. Der am Widerstand 10 hervorgerufene Spannungsabfall wird dann in geeigneter Weise, insbesondere durch eine RC-Schaltung geglättet.

Der Strom $I_2$ kann auch auf eine andere bekannte Art erfaßt werden. Insbesondere kann eine zusätzliche Wicklung des im Spannungsumsetzer 8 vorhandenen Übertragers als Stromfühler verwendet werden.

Durch die Begrenzung des Eingangsstromes des Spannungsumsetzers 8 ergibt sich, daß bei einer möglichen ausgangsseitigen Überlast die Ausgangsspannung U3 abgesenkt und gleichzeitig dem Verbraucher V — entsprechend der konstant gehaltenen Ausgangsleistung — ein erhöhter Strom angeboten wird. Entweder stellt sich dann wieder ein stabiler Zustand ein oder es wird durch geeignete Maßnahmen die Überlast beseitigt und der Verbraucher mit dem dann ausreichenden Strom wieder auf die ursprüngliche Spannung gebracht, für die die Schaltungsanordnung dimensioniert ist.

Ferner kann es zweckdienlich sein, das Tastverhältnis des Schaltreglers SR auch intern zu begrenzen. Dadurch wird in jedem Fall die maximal mögliche Leitstungsabgabe des Schaltreglers SR im Schaltbetrieb des Schalters 3 erreicht. Außerdem wird so bei einem möglichen Fehlverhalten der Schaltmittel 8 bis 11 oder an den Grenzen des Regelbereichs der Ansteuervorrichtung 9 gewährleistet, daß der Schaltregler SR nicht überlastet werden kann. Bei Erreichen und möglichem Überschreiten der so festgelegten maximalen Leistungsabgage des Schaltreglers SR wird dann die Eingangsspannung U1 der Schaltungsanordnung reduziert und eine statische Strombegrenzung ist nicht erforderlich.

Wesentlich ist, daß die aufgenommene Leistung des Spannungsumsetzers 8 unterhalb der vom vorgeschalteten Strom-Spannungs-Wandler SR maximal abgebbaren Leistung liegt. Dieser beschränkt dann von sich aus das Tastverhältnis entsprechend, so daß der Schalter 3 bei jeder Periode eine gewisse Zeit geschlossen wird und der gesamte Wandler SR gleichbleibende Betriebsbedingungen vorfindet.

Ein günstiges dynamisches Verhalten ergibt sich, wenn die Grenzleistung infolge der Strombegrenzung von $I_2$ nur geringfügig unter die Grenze derjenigen Leistung gelegt wird, die der Schaltregler SR maximal abgeben kann.

Statt einem Verbraucher V können auch mehrere Verbraucher an dem oder den Ausgängen angeschlossen werden. Eine solche Anordnung zeigt Figur 2.

Sind entsprechend Figur 2 an den Spannungsumsetzer 8 mehrere Verbraucher V1 ... Vn angeschlossen, so können nach Beseitigung der Überlast, zum Beispiel durch Ansprechen einer der Sicherungen S1 ... Sn die verbliebenen Verbraucher wieder auf die ursprüngliche Spannung gebracht werden.

Der die Überlast verursachende Verbraucher kann leicht abgeschaltet werden, da er einen erhöhten Strom aufnimmt, der die Sicherung zum Ansprechen bringt. Selbst Umrichter als Lastkreise, die bei Unterspannung einen erhöhten Strom aufnehmen, können von der Schaltungsanordnung versorgt werden.

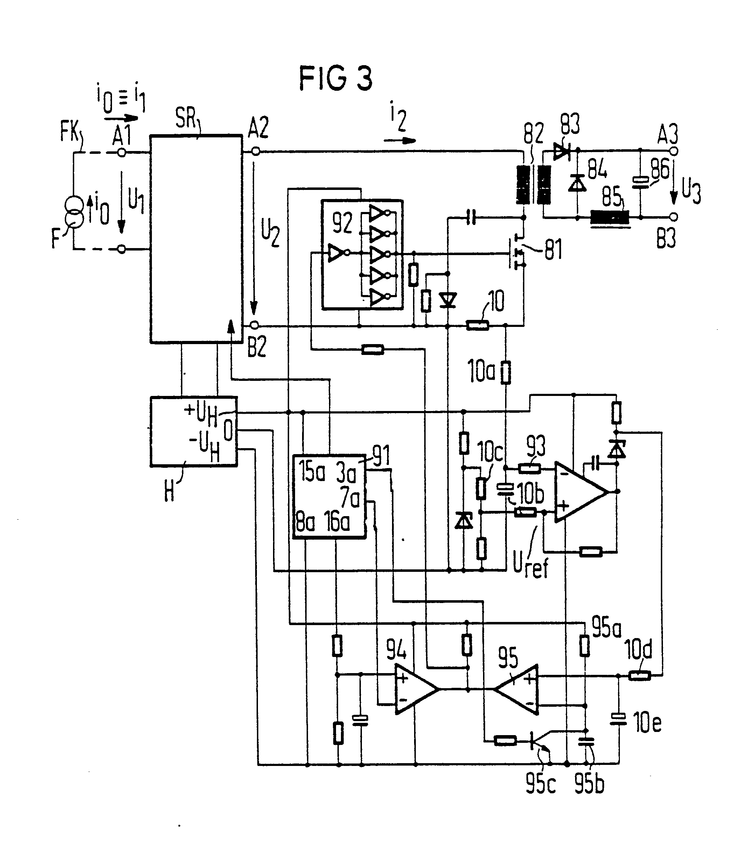

Figur 3 zeigt weitere Einzelheiten einer bevorzugten Ausführungsform der Schaltungsanordnung nach Figur 1. Der Strom-Spannungs-Wandler SR erzeugt zwischen seinen Ausgangsklemmen A2 bis B2 die auf einen konstanten Wert geregelte Spannung U2 von 340 V. Der Schaltregler SR bezieht die dafür benötigte Leistung aus dem Fernspeisekreis FK, der einen konstant gehaltenen Strom $I_0$ von 0,4 A abgibt. Die Eingangsspannung U1 wird durch eine Regeleinrichtung der jeweils geforderten Ausgangsleistung angepaßt. Der Schaltregler SR enthält den integrierten Schaltkreis 91 vom Typ SG 3524 J, der die Funktion des Takterzeugers 6 und der Ansteuervorrichtung 7 nach Figur 1 einschließt, und in Figur 2 außerhalb des Schaltreglers SR dargestellt ist, um seine Wirkungsweise bei der Steuerung des den Spannungsumrichter 8 bildenden Durchflußwandlers besser zeigen zu können.

Die Schaltungsanordnung enthält ferner eine Vorrichtung H zur Erzeugung von Hilfsspannungen. Die Anschlußbezeichnungen des integrierten Schaltkreises 91 sind zur Unterscheidung von Bezugszeichen jeweils durch ein « a » ergänzt. Der Schaltkreis 91 gibt an seinem Anschluß 16a eine stabilisierte Referenzspannung von 5 V ab, an Anschluß 3a ca. 3 V hohe schmale Pulse im Rhythmus der Taktfrequenz und an Anschluß 7a einen sägezahnförmigen Impulszug gleicher Frequenz, der jeweils von ca. 1 V auf ca. 3,5 V hochläuft.

Die genannten Anschlüsse werden in ihren Funktionen auch für die Ansteuerung des Schaltreglers SR verwendet. Von der am Anschluß 16a liegenden Referenzspannung wird eine Schwellspannung abgeleitet, die vom Komparator 94 mit dem Sägezahn verglichen wird. Am Ausgang des Komparators 94 entsteht so auf einfache Weise ein Rechteckimpulszug mit festem Tastverhältnis, der über den Ansteuerbaustein 92 den Leistungs-Feldeffekttransistor 81 des als Durchflußwandler ausgebildeten Spannungsumsetzers 8 schaltet. Der Durchflußwandler enthält den Transformator 82, die Dioden 83 und 84, die Drossel 85 und den Kondensator 86 und erzeugt in bekannter Weise am Ausgang A3, B3 die Gleichspannung U3. Die Gleichspannung U3 ist im Normalbetrieb zumindest näherungsweise konstant, da der Spannungsumsetzer mit einer Konstantspannung U2 gespeist ist.

Die Vorrichtung 91, die die Funktion des Taktgebers 6 und des Reglers 7 umfaßt, gibt unter anderem eine sägezahnförmige, im Takt periodische Spannung an ihrem Anschluß 7a ab. Diese wird direkt der Ansteuervorrichtung 9 zugeleitet. Dessen Teil, der die Pulsfolge mit dem festen Tastverhältnis, das für Belastungen gilt, für die die Lastbegrenzung noch nicht wirksam ist, kann damit in besonders einfacher Weise aufgebaut werden.

Zur Begrenzung der vom Schaltregler SR ausgangsseitig abgegebenen Leistung wird der pulsförmig fließende Strom $I_2$ in dem als Stromfühler dienenden Widerstand 10 von zum Beispiel 2 Ω erfaßt. Vom Spannungsabfall am Widerstand 10 wird im RC-Glied 10a, 10b der Mittelwert gebildet. Der Mittelwert wird dem invertierenden Eingang des Operationsverstärkers 93 zugeführt. Der Operationsverstärker 93 vergleicht die am Kondensator 10b liegende Spannung mit der von dem Spannungsabfall an der Z-Diode 10c abgeleiteten Referenzspannung $U_{ref}$. Die Ausgangsspannung des Operationsverstärkers 93, die sich bei geringfügiger Überschreitung des vorgegebenen Maximalwertes des Stromes $I_2$ stark vom Wert $+ U_H = 12$ V zum Wert $- U_H = - 2$ V verschiebt, bildet über das RC-Glied 10d, 10e verzögert die Schwellspannung des Komparators 95. Dem invertierenden Eingang des Komparators 95 wird eine nichtlineare Sägezahnspannung zugeführt.

Die Sägezahnspannung wird durch periodisches Laden des Kondensator 95b durch den Widerstand 95a und Entladen durch den Transistor 95c, der vom Anschluß 3a des Schaltregelkreises 91 angesteuert wird, erzeugt.

Da die Komparatoren 94 und 95 einen offenen Kollektor-Ausgang haben, bilden die beiden Ausgänge der Komparatoren 94 und 95 eine Oder-Verknüpfung. Die für den Ausgang dieser ODER-Verknüpfung maßgebende Impulsbreite wird immer durch denjenigen Komparator bestimmt, der die schmäleren positiven Impulse erlaubt. Es wird so mit einfachen Mitteln ein unvermittelter Übergang von konstantem auf pulsbreitenmoduliertes Tastverhältnis geschaffen. Eine andere Möglichkeit besteht in dem bekannten Verschieben einer Schwelle.

Die Z-Diode unmittelbar am Ausgang des Regelverstärkers 93 verhindert ein zu starkes Absinken der Schwelle und begrenzt die mögliche Änderung der Breite der den Spannungswandler 8 ansteuernden Impulse. Wird die Belastung am Ausgang A3, B3 weiter erhöht, so wirkt die durch die Bemessung des Schaltreglers SR gegebene Begrenzung des Stromes $I_2$ und damit auch der maximalen Leistungsaufnahme der Schaltungsanordnung. Es kommt zu dem eingangs erwähnten Zusammenbruch der Eingangsspannung U1 und der Ausgangsleistung. Dabei ergibt sich auch, daß einerseits der Ausgangsstrom und andererseits die Amplitude der Stromimpulse im Schaltglied 81 niemals Werte erreichen können, die zu Schäden in der Schaltungsanordnung führen könnten.

## Patentansprüche

1. Schaltungsanordnung zur Speisung von elektrischen Verbrauchern (V) mit einer Gleichspannung, wobei wenigstens ein Verbraucher (V) über einen Schaltregler (SR) an einen mit einem eingeprägten Strom ($I_0$) gespeisten Speisekreis (FK) angeschlossen ist und der Schaltregler (SR) ein mittels einer Steuerschaltung (6, 7) in Abhängigkeit von der wenigstens näherungsweise konstant zu haltenden Gleichspannung (U2 bzw. U3) steuerbares Schaltglied (3) enthält, wobei das mit Schaltimpulsen steuerbare Schaltglied (3) parallel zum Eingang des Schaltreglers (SR) angeordnet ist und zwischen dem Schaltglied (3) und einem parallel zum Ausgang des Schaltreglers (SR) liegenden Kondensator (5) eine derart gepolte Diode (4) liegt, daß die Diode (4) bei leitendem Schaltglied (3) gesperrt ist, und wobei zwischen dem Ausgang des Schaltreglers (SR) und wenigstens einem Verbraucher (V) ein Spannungsumrichter (8) angeordnet ist, dadurch gekennzeichnet, daß die Schaltungsanordnung mit einem Stromfühler für den Eingangsstrom des Spannungsumrichters (8) versehen ist und daß der Spannungsumrichter (8) mittels des Stromfühlers und einer an den Stromfühler (10) angeschlossenen weiteren Steuerschaltung (9, 11) derart steuerbar ist, daß er bei Eingangsströmen oberhalb eines vorgegebenen Grenzwertes eine verminderte Ausgangsspannung bzw. verminderte Ausgangsspannungen abgibt.

2. Schaltungsanordnung nach Anspruch 1, dadurch gekennzeichnet, daß der vorgegebene Grenzwert des Stromes kleiner als der eingeprägte Strom ($I_0$) ist.

3. Schaltungsanordnung nach Anspruch 1 oder 2, dadurch gekennzeichnet, daß der Spannungsumrichter (8) wenigstens ein durch Steuerimpulse der weiteren Steuerschaltung gesteuertes Schaltglied (81) enthält und daß die Steuerschaltung eine Anordnung zu einer Veränderung der Dauer und/oder der Folgefrequenz der Steuerimpulse in Abhängigkeit von der Ausgangsgröße des Stromfühlers enthält.

4. Schaltungsanordnung nach einem der Ansprüche 1 bis 3, dadurch gekennzeichnet, daß der Spannungsumrichter (8) für Eingangsströme unterhalb des Vergegebenen Grenzwertes ein ungeregelter Durchflußumrichter mit Trennübertrager ist.

5. Schaltungsanordnung nach einem der Ansprüche 1 bis 4, dadurch gekennzeichnet, daß der Stromfühler ein in Serie zum Eingang des Spannungsumrichters (8) angeordneter Widerstand (10) mit nachgeschaltetem Verstärker ist.

6. Schaltungsanordnung nach einem der Ansprüche 1 bis 5, dadurch gekennzeichnet, daß der in Serie zum Eingang des Spannungsumrichters (8) liegende Stromfühler mit einer Anordnung zur Glättung der Spannung versehen ist.

7. Schaltungsanordnung nach einem der Ansprüche 1 bis 6, dadurch gekennzeichnet, daß der Schaltregler (SR) mit einer Vorrichtung zur Begrenzung des Tastverhältnisses der Schaltimpulse versehen ist.

8. Schaltungsanordnung nach einem der Ansprüche 1 bis 7, dadurch gekennzeichnet, daß die zur Steuerung des Spannungsumrichters (8) vorgesehene Steuerschaltung (9) zwei mit ihren Ausgängen nach Art einer ODER-Verknüpfung zusammengeführte Komparatoren (94, 95) enthält, von denen der eine (94) so gesteuert ist, daß er Impulse mit vorgegebener Impulsbreite abgibt und der andere (95) durch eine vom Stromfühler (10) abgegebene Spannung derart gesteuert ist, daß er breitenmodulierte Impulse abgibt.

9. Schaltungsanordnung nach einem der Ansprüche 1 bis 8, dadurch gekennzeichnet, daß an wenigstens einem Ausgang des Spannungsumrichters (8) mehrere Verbraucher (V1 ... Vn) über je eine eigene Sicherung (S1 ... Sn) angeschlossen sind.

10. Schaltungsanordnung nach einem der Ansprüche 1 bis 9, gekennzeichnet durch eine Verwendung der Schaltungsanordnung in einer Einrichtung zur Fernspeisung von Zwischenstellen einer Nachrichtenübertragungseinrichtung.

## Claims

1. Circuit arrangement for supplying electrical appliances (V) with a direct voltage, in which arrangement at least one appliance (V) is connected via a switched-mode regulator (SR) to a supply circuit (FK) which is supplied with an impressed current ($I_0$) and the switched-mode regulator (SR) contains a switching element (3) which can be controlled by means of a control circuit (6,7) in dependence on the direct voltage (U2 and U3) which must be kept at least approximately constant, the switching element (3), which can be controlled by means of switching pulses, being arranged in parallel with the input of the switched-mode regulator (SR) and a diode (4) being located between the switching element (3) and a capacitor (5) which is located in parallel with the output of the switched-mode regulator (SR), this diode (4) being polarized in such a manner that the diode (4) is cut-off when the switching element (3) conducts and a voltage converter (8) being arranged between the ouptut of the switched-mode regulator (SR) and at least one appliance (V), characterized in that the circuit arrangement is provided with a current sensor for the input current of the voltage converter (8) and that the voltage converter (8) can be controlled by means of the current sensor and a further control circuit (9,11), which is connected to the current sensor (10), in such a manner that it outputs a reduced output voltage or reduced output voltages with input currents above a predetermined limit value.

2. Circuit arrangement according to Claim 1, characterized in that the predetermined limit value of the current is lower than the impressed current ($I_0$).

3. Circuit arrangement according to Claim 1 or 2, characterized in that the voltage converter (8) contains at least one switching element (81) which is controlled by control pulses of the further control circuit and that the control circuit contains an arrangement for changing the duration and/or the repetition frequency of the control pulses in dependence on the output variable of the current sensor.

4. Circuit arrangement according to one of Claims 1 to 3, characterized in that the voltage converter (8) is an unregulated forward converter with isolating transformer for input currents below the predetermined limit value.

5. Circuit arrangement according to one of Claims 1 to 4, characterized in that the current sensor is a resistor (10), which is arranged in series with the input of the voltage converter (8), with a subsequent amplifier.

6. Circuit arrangement according to one of Claims 1 to 5, characterized in that the current sensor, which is located in series with the input of the voltage converter (8), is provided with an arrangement for smoothing the voltage.

7. Circuit arrangement according to one of Claims 1 to 6, characterized in that the switched-mode regulator (SR) is provided with a device for limiting the duty ratio of the switching pulses.

8. Circuit arrangement according to one of Claims 1 to 7, characterized in that the control circuit (9) provided for controlling the voltage converter (8) contains two comparators (94,95) which are connected together with their outputs in the manner of an OR combination, one of which (94) is controlled in such a manner that it outputs pulses with a predetermined pulse width and the other one of which (95) is controlled by a voltage emitted by the current sensor (10), in such a manner that it outputs width-modulated pulses.

9. Circuit arrangement according to one of Claims 1 to 8, characterized in that, at at least one output of the voltage converter (8), several appliances (V1 ... Vn) are connected via a separate fuse (S1 ... Sn) in each case.

10. Circuit arrangement according to one of Claims 1 to 9, characterized by a use of the circuit arrangement in a device for power supplying relay points of a communications transmission facility.

**Revendications**

1. Montage pour alimenter des appareils d'utilisation électriques (V) avec une tension continue, et dans lequel au moins un appareil d'utilisation (V) est raccordé par l'intermédiaire d'un régulateur de commutation (SR) à un circuit d'alimentation (FK) alimenté par un courant injecté ($I_0$) et le régulateur de commutation (SR) contient un élément de commutation (3) pouvant être commandé au moyen d'un circuit de commande (6, 7) en fonction de la tension continue (U2 ou U3) devant être maintenue au moins approximativement constante, et dans lequel l'élément de commutation (3) commandable à l'aide d'impulsions de commutation est disposé en parallèle avec l'entrée du régulateur de commutation (SR), et entre l'élément de commutation (3) et un condensateur (5) disposé en parallèle avec la sortie du régulateur de commutation (SR) se trouve disposée une diode (4) polarisée de telle sorte qu'elle est bloquée lorsque l'élément de commutation (3) est conducteur, et dans lequel un convertisseur statique de tension (8) est disposé entre la sortie du régulateur de commutation (SR) et au moins un appareil d'utilisation (V), caractérisé par le fait que le montage est équipé d'un détecteur de courant servant à détecter le courant d'entrée du convertisseur statique de tension (8), et que ce dernier peut être commandé au moyen du détecteur de courant et d'un autre circuit de commande (9,11) raccordé au détecteur de courant (10) de telle sorte que pour des courants d'entrée supérieurs à une valeur limite prédéterminée, il délivre une ou des tensions de sortie réduites.

2. Montage suivant la revendication 1, caractérisé par le fait que la valeur limite prédéterminée du courant est inférieure au courant injecté ($I_0$).

3. Montage suivant la revendication 1 ou 2, caractérisé par le fait que le convertisseur statique de tension (8) contient au moins un élément de commutation (80) commandé par des impulsions de commande de l'autre circuit de commande et que le circuit de commande contient un dispositif servant à modifier la durée et/ou la fréquence de récurrence des impulsions de commande en fonction de la grandeur de sortie du détecteur de courant.

4. Montage suivant l'une des revendications 1 à 3, caractérisé par le fait que le convertisseur statique de tension (8) est, pour des courants d'entrée inférieurs à la valeur limite prédéterminée, un convertisseur statique de traversée non réglé, comportant un transformateur de séparation.

5. Montage suivant l'une des revendications 1 à 4, caractérisé par le fait que le détecteur de courant est une résistance (10), qui est branchée en série avec l'entrée du convertisseur statique de tension (8) et en aval de laquelle est branché un amplificateur.

6. Montage suivant l'une des revendications 1 à 5, caractérisé par le fait que le détecteur de courant disposé en série avec l'entrée du convertisseur statique de tension (8) est équipé d'un dispositif servant à lisser la tension.

7. Montage suivant l'une des revendications 1 à 6, caractérisé par le fait que le régulateur de commutation (SR) comporte un dispositif servant à limiter le taux d'impulsions des impulsions de commutation.

8. Montage suivant l'une des revendications 1 à 7, caractérisé par le fait que le circuit de commande (9) prévu pour la commande du convertisseur statique de transfert (8) contient deux comparateurs (94,95) qui sont réunis par leurs sorties à la manière d'une combinaison logique OU et dont l'un (94) est commandé de manière à délivrer des impulsions possédant une durée prédéterminée, et dont l'autre (95) est commandé par une tension délivrée par le détecteur de courant (10) de manière à délivrer des impulsions modulées en durée.

9. Montage suivant l'une des revendications 1 à 8, caractérisé par le fait que plusieurs appareils d'utilisation (V1 ... Vn) sont raccordés à au moins une sortie du convertisseur statique de tension (8) par l'intermédiaire de fusibles associés (S1 ... Sn).

10. Montage suivant l'une des revendications 1 à 9, caractérisé par l'utilisation du montage dans un dispositif pour réaliser l'alimentation à distance de postes intermédiaires d'une installation de transmission d'informations.

# FIG 1

# FIG 2

# FIG 3